# EUROPEAN PATENT APPLICATION

(11) **EP 4 570 448 A1**
(43) Date of publication of application: **18.06.2025**
(21) Application number: 23216073.9
(22) Date of filing: 12.12.2023
(51) Int. Cl.: B25J 9/16

(54) **PREDICTION, CONTROL AND DETERMINATION OF OVERALL WORKING PRECISION OF A ROBOT**

(71) Applicant: Pmrobots GmbH, 78126 Königsfeld im Schwarzwald (DE); Universidad Politécnica de Madrid, 28040 Madrid (ES)
(72) Inventor: FERRERAS HIGUERO, Eugenio, 78126 Königsfeld im Schwarzwald (DE); VIZÁN IDOIPE, Antonio, 28040 Madrid (ES)
(74) Representative: Elion IP, S.L.

(57) **Abstract**

A method comprising: processing a simulated movement of a robot in at least one processing operation to determine deviations of the robot due to a dynamic response of the robot and external stresses on the robot; estimating an overall working precision on a robot end-effector, at each of one or more path coordinates of the end-effector, taking into account effects of the robot dynamic response and process response of at least one processing operation; performing a predictive calculation of torques in robot joints under robot idle and working conditions, according to a predetermined process force model and/or with information from a process force and torque profile, resulting in predictive torque profiles; performing a calculation of a ratio between robot deviations and at least one deviation of a measured torque from a nominal torque at each joint of the robot; monitoring the measured torques at the joints of the robot, preferably in real time, based on the predictive torque profiles; and generating an alarm action and/or a corrective action based on the monitoring of the measured torques.

## Description

### TECHNICAL SECTOR

The present invention refers to the robot sector. More specifically, the invention refers to a method for the prediction, control and determination of the overall working precision of a robot in processing operations, based on the prior estimation, in the preparation phase, of the dimensional deviations caused by the static and dynamic behaviour of the robot during the process and of the machining or other processing errors.

### BACKGROUND TO THE INVENTION

Robots are used in various applications such as handling, deburring, welding and machining of low robot working precision, among others.

Algorithms and procedures for determining the stiffness and damping of robot joints and their influence on the dynamic behaviour of the robot are well known. Models that simulate and procedures that determine and control, under certain conditions, the trajectory or position during machining are also known.

However, there are no industrial procedures that determine and control the overall working precision of the robot in machining operations or similar processes, taking into account the errors of the process itself, in addition to the errors derived from the robot. In these processes, there is an influence of the robot's behaviour on the process parameters themselves.

The use of robots in machining operations or similar processes with a relatively high level of overall working precision is rare, due to the lack of knowledge of their accuracy and repeatability at the process planning stage. The need to carry out a large number of tests in the process planning phase to ensure the quality of the parts makes this economically unfeasible.

In the particular application of robots used in machining operations, force profiles and thresholds have been established by experimental methods as a basis for controlling whether the operation is correctly performed by the robot. When the product to be processed changes, these methods are not applicable. A new profile setup would have to be redone and, therefore, there is no general procedure that can be used in any production situation.

In order to be able to use robots in machining or similar process operations for high levels of overall working precision, it would be desirable to have a prediction or control method that determines the working precision and repeatability as a function of the robot position and the machining or other process to be performed and the torques in the robot joints associated with the operation.

### GENERAL DESCRIPTION

A first aspect of the invention relates to a method for predicting, controlling and determining the overall working precision of a robot. The method comprises:
processing a simulated movement of a robot in at least one processing operation to determine deviations of the robot due to a dynamic response of the robot and external stresses on the robot;
estimating an overall working precision on a robot end-effector, at each of one or more path coordinates of the end-effector, taking into account effects of the robot dynamic response and process response of at least one processing operation;
performing a predictive calculation of torques in robot joints under robot idle and working conditions, according to a predetermined process force model and/or with information from a process force and torque profile, resulting in predictive torque profiles;
performing a calculation of a ratio between robot deviations and at least one deviation of a measured torque from a nominal torque at each joint of the robot;
monitoring the measured torques at the joints of the robot, preferably in real time, based on the predictive torque profiles; and
generating an alarm action and/or a corrective action based on the monitoring of the measured torques.

From the evolution of the robot torques, it is possible to determine the robot deviations, preferably in the process planning phase. This makes it possible to monitor the movements of the robot during the process, thus ensuring the overall working precision of the robot required in the operation.

The evaluation of the evolution of the torques in joints, torque profiles, is the basis for the control. The method, in addition to determining the overall working precision of the robot, makes it possible to determine the relationship between the robot deviations and the torques in joints during the process, thus making it possible to control or monitor the operation.

The method also makes it possible to determine during operation the malfunctioning of any of the elements of the system (e.g. robot, spindle or driving element of the process, tool, workpiece, etc.) or to detect collisions with elements of the system.

A second aspect of the invention relates to a data processing device or system comprising means for carrying out the method according to the first aspect of the invention.

A third aspect of the invention relates to an assembly comprising the data processing device or system according to the second aspect of the invention and a robot communicatively coupled to the data processing device or system. In some embodiments, the robot includes the data processing device or system.

A fourth aspect of the invention relates to a computer program comprising instructions which, when the program is executed on at least one processing device (e.g., one or more computers, one or more servers, one or more controllers, one or more ASICs, one or more FPGAs, one or more microcontrollers, etc.), causes the at least one processing device to carry out the method according to the first aspect of the invention.

A fifth aspect of the invention relates to a computer-readable medium comprising instructions which, when executed by at least one processing device, cause the at least one processing device to carry out the method according to the first aspect of the invention. In some embodiments, the readable medium is a non-transitory medium.

A sixth aspect of the invention relates to a data-carrying signal carrying the software according to the fourth aspect of the invention.

### BRIEF DESCRIPTION OF THE DRAWINGS

In order to complement the description herein and to assist in a better understanding of the features of the invention, a set of drawings is attached hereto as an integral part of the said description, in which the following is illustratively and non-limitingly depicted:
FIG. 1 is a block diagram of the method for the prediction, control and determination of the overall working precision of a robot according to embodiments;

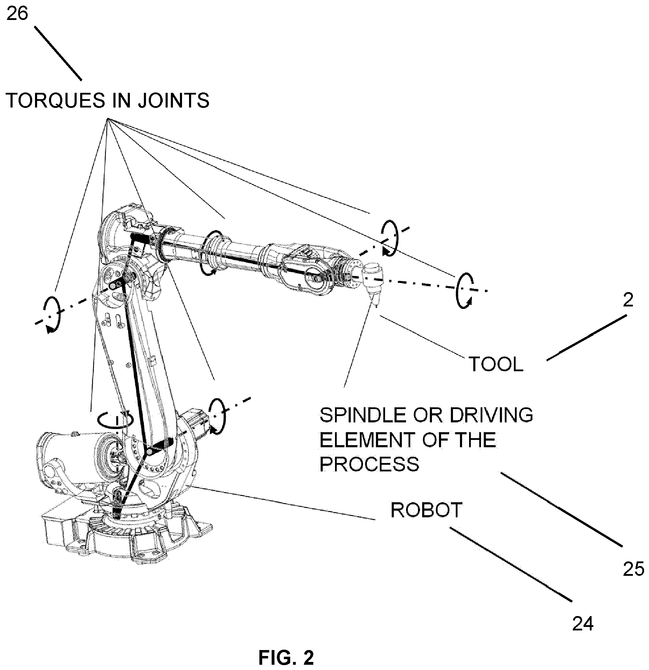

FIG. 2 shows examples of torques in joints of a robot that can, for example, employ the method of the present disclosure;
FIG. 3 shows a process of a robot model relating the repeatability of a process carried out by the robot to the movement of the robot according to embodiments;
FIG. 4A and FIG. 4B show examples of diagrams of a prediction of torques in the joints of a robot during a given process such as, but not limited to, machining a workpiece;
FIG. 5 shows example diagrams of a prediction of deviations for each coordinate axis of an end-effector (TCP) during a given process such as, but not limited to, machining; and
FIG. 6 shows a process for controlling and correcting the position or trajectory of a robot as a function of proximity to the limits of the range of permissible torques, according to embodiments.

### DETAILED DESCRIPTION

The prediction, control and determination of the overall working precision 16 of a robot 24 preferably includes a precision model 11 with dynamic deviations for the various process positions of a sequence of movements of a robot resulting in predictive torque profiles 31 in several or all joints of the robot and a profile of deviations for each coordinate axis of an end-effector (TCP) of a robot.

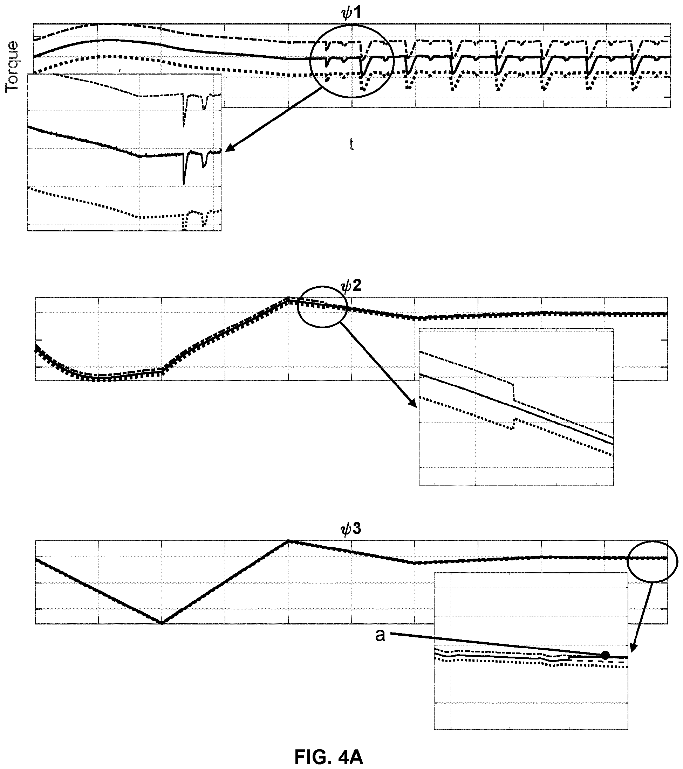

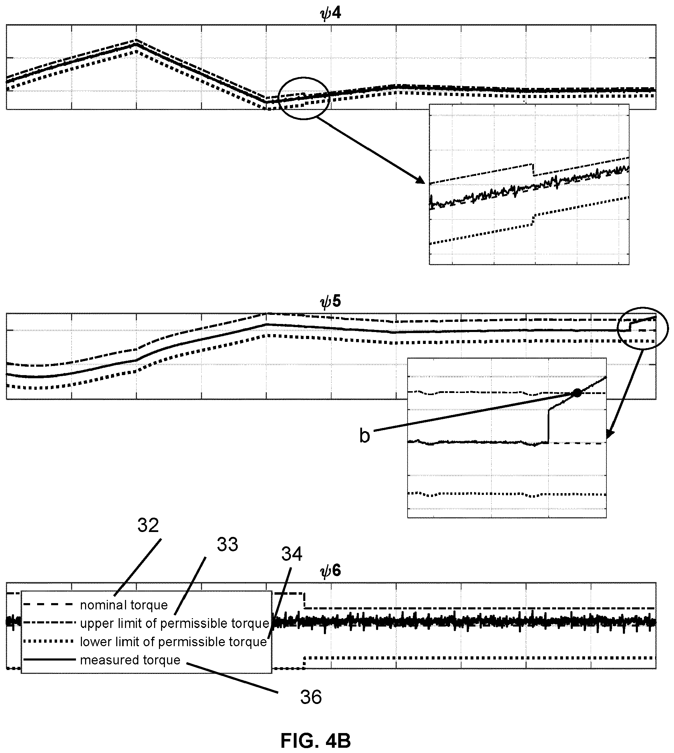

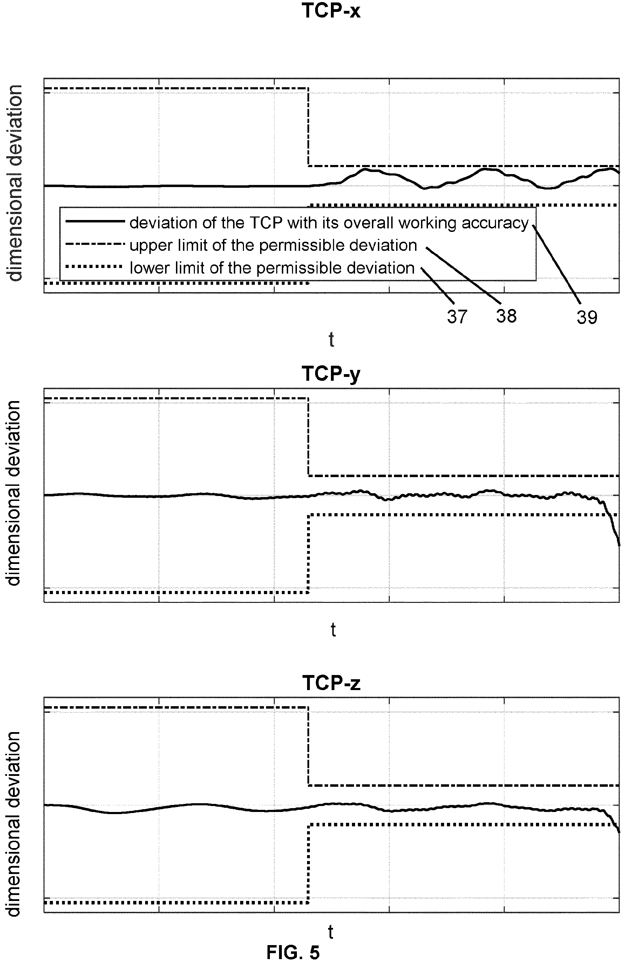

Thus, by incorporating predictive torque profiles 31 of joints, as shown in FIG. 4A and FIG. 4B, by relating the same to the deviation of the TCP 39 as illustrated in FIG. 5, it can be determined whether geometric specifications are met in the processing of a predetermined workpiece by the robot. For this purpose, a transformation of the geometric element tolerances to dimensional tolerances of each point to be processed on the workpiece is made.

The torques in the joints 26 are determined from the torques exerted by the robot drives, without the need for direct measurement of the forces developed during the process. In this way there is a constant measurement of the robot solicitations during the process, making it possible to determine the deviations of the torques with respect to the torques estimated by means of a model provided for this purpose. Thus, there is a dynamic verification of the evolution of the robot deviations 10, which will be much simpler and less costly than if the limits had been established experimentally for each workpiece forming operation.

Specifically, the prediction, control and determination of the overall working precision 16 of a robot, preferably in robots 24 used in operations such as machining or similar process, based on determining the permissible predictive torque profiles 31 of the joints for multiple positions (or, preferably, each position) and multiple configurations (or, preferably each configuration) of the robot during the process, instead of determining the corrected coordinates of the movement of the robot to ensure the absence of dimensional errors in the workpiece, or considering thresholds of forces generated at the TCP or having upper and lower bound force profiles at the TCP generated during the process and established experimentally, it determines the movement coordinates by their relationship to the measured torques 36 in joints. In this way, it is possible to constantly monitor the process and allow the generation of one or more corresponding alarm and/or corrective actions.

On the other hand, the method also makes it possible to determine the profile of deviations for each coordinate axis of an end-effector (TCP) 39 of a robot 24. These deviations are determined during the course of the process by monitoring the torques in joints 26. It is possible to determine whether the movement is within the specifications of the given process.

This gives the robot 24 the ability to monitor operations without the need for pre-testing or measuring devices.

Also, a precision model 11 can be provided that captures the propagation of the dimensional deviations introduced by all the elements that are part of the robotic system during the process and relates the measured torques 36 in the joints to the profile of deviations for each coordinate axis of an end-effector (TCP) 39 of a robot 24.

The present method for predicting, controlling and determining the overall working precision 16 of a robot 24 at least comprises:
1. Processing a simulated movement 30 of the robot 24 in processing operations by determining the robot deviations 10 due to the dynamic response of the robot 24 and external stresses (e.g., process parameters 1, tool 2, workpiece 3). In some embodiments, the method comprises simulating such movement of the robot 30.

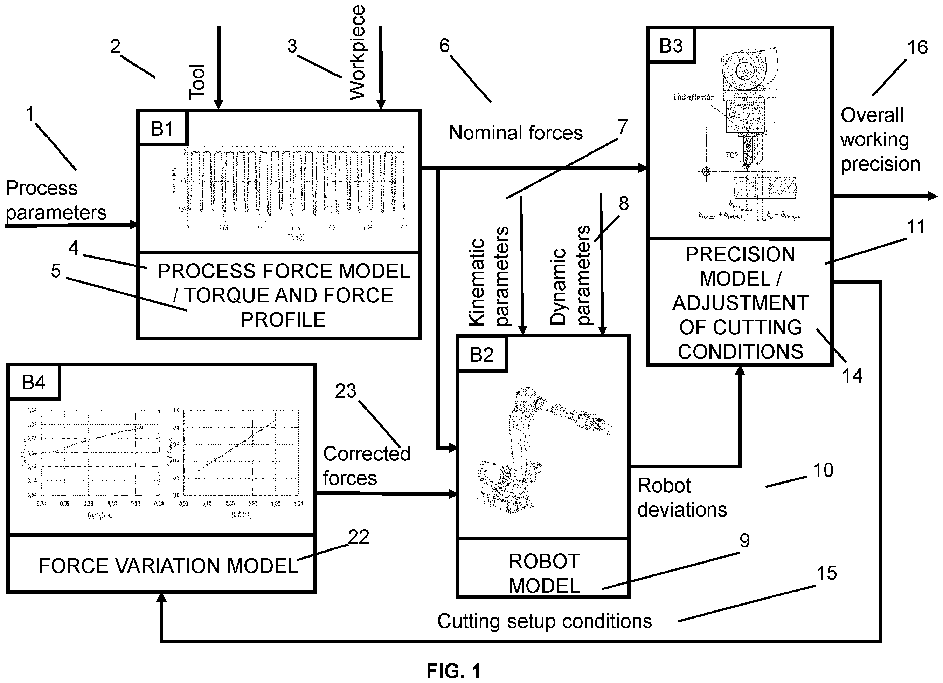

The processing operations (process parameters 1) are introduced, as can be seen in FIG. 1 Block B1, by means of a model (process force model 4), or with a previous representative measurement (or set of measurements) (torque and force profile 5). The process parameters 1, together with the data of the tool 2, preferably including tool geometry and tool material, and the data of the workpiece 3, preferably including dimensions, material, dimensional and shape tolerances, are entered at this stage. As a result, the nominal forces 6 of the entire process are obtained. These forces are not constant, they vary during the course of the process. Alternatively, these forces can be obtained by measurement with force sensors.

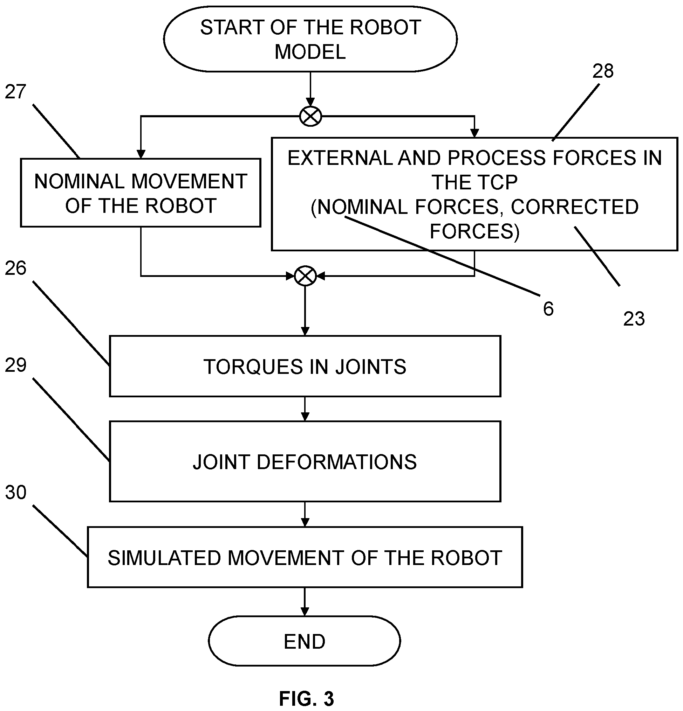

The external and process forces in the TCP 28 obtained (nominal forces 6 and corrected forces 23) are introduced in the robot model 9, obtaining the robot deviations 10, as shown in Block B2. For this purpose, the robot model 9 uses kinematics to obtain the nominal movements of the robot 27, inverse dynamics for the torques in joints 26 and direct dynamics for the simulated movements of the robot 30. In the kinematics the kinematic parameters 7 are entered and in the inverse and direct dynamics the kinematic parameters 7 and dynamic parameters 8 are entered. The robot model 9 algorithm is shown in FIG. 3. The robot deviations 10 are obtained from the difference between the simulated movements of the robot 30 and the nominal movements of the robot 27. The model takes into account the joint deformations 29 by incorporating the stiffness and damping of the joints.

The precision model 11, from the robot deviations 10 and the nominal forces 6 produced by the process itself, obtains the robot working precision 17 (e.g., repeatability 12, accuracy 13), as can be seen in Block B3. The repeatability 12 is obtained for successive points defining the path of the robot 24. These deviations affect the process conditions and, in turn, the value of the external forces of the robot 24. This block also provides the real conditions of the machining or processing operation. It outputs the cutting setup conditions 15 and the overall working precision 16. The cutting setup conditions 15 are obtained from the simulated movements of the robot 30. The overall working precision 16 can be obtained, for example, from the following equation:
overall working precision 16 = robot working precision 17 + deviation of the tool 18 + mounting deviation of a spindle 19 of the robot + deformation of the workpiece 20 + deformation of a fixture 21 of the robot

The force variation model 22, recalculates in real time the new forces (corrected forces 23) to which the robot 24 will be subjected, as a consequence of the variations in the process conditions obtained in the precision model 11, as shown in Block B4. From these forces, the corresponding robot deviations 10 are recalculated.

2. Estimation of the overall working precision 16 (e.g., by means of the equation shown above) at a robot terminal element at each of one or more coordinates of the paths by considering the effects of the robot dynamic response 24 (kinematic parameters 7 and dynamic parameters 8) and process (nominal forces 6, corrected forces 23), and taking into account, in some preferred embodiments, the error propagation of one, several or all elements of the system (e.g., repeatability 12, adjustment of cutting conditions 14, deviation of the tool 18, mounting deviation of the spindle 19).

3. Predictive calculation of the torques in joints 26 of the robot 24 under robot idle and working conditions as shown in FIG. 4A and FIG. 4B, according to a predetermined process force model 4 or with information from the torque and force profile 5, as shown in Block B1.

4. Calculation of the ratio of the robot deviations 10 and the deviation of the measured torque 36 from the nominal torque 32 at each joint.

The torques are calculated by entering the simulated position in the inverse dynamics.

5. Monitoring the torques in joints 26 in real time (measured torque 36) based on the predictive torque profiles 31 (upper limit of the permissible torque 33, lower limit of the permissible torque 34) and generating alarm 41 and/or corrective actions.

In some embodiments, the predictive torque profiles 31 in joints comprise at least the estimated/simulated torque values and the maximum and minimum torque values corresponding to the maximum and minimum permissible dimensional deviations obtained from the part specifications.

In the control phase, each point of the predictive torque profiles 31 in joints considers the difference between the estimated torque and the measured torque 36 in each joint for the different configurations adopted by the robot 24 during the process.

The predictive torque profiles 31 in joints are obtained, in some embodiments, using the precision model 11, wherein the propagation of the deviations of the various elements of the system is collected, considering that the input information may be obtained from, among others, one or more of the following:
1. A process force model 4 and inputting the nominal forces 6 obtained therefrom (described according to Block B1) into the robot model algorithm (FIG. 3);
2. The evolution of the forces and torques measured during the process or previously in a similar process (torque and force profile 5) and entering the nominal forces 6 obtained from it (described according to Block B1) into the algorithm of the robot model (FIG. 3);
3. From a diagram of measured position deviations, entering these values into the robot model algorithm (FIG. 3).

The possible combinations for generating the predictive torque profiles 31 in joints are not mutually exclusive, so that combinations are also possible, which would be within the scope of the present disclosure.

In some embodiments, the method also comprises determining a profile of deviations for each coordinate axis of an end-effector (TCP) 39 of a robot 24, as shown in FIG. 5, for consideration by its controller to improve its overall working precision 16 of the robot. For each point, deviations may be obtained as discussed above. Thus, in some of these embodiments, in the method adjustments are also made in a robot control in base to the profile of deviations to increase an overall working precision of the robot.

In some embodiments, the profile of deviations for each coordinate axis of an end-effector (TCP) 39 of a robot 24 comprises, at a minimum, the values of the maximum and minimum deviations along the coordinate axes of the tip of the end-effector for the points along the path of the robot 24 in performing an operation.

In the control phase, each point of the profile of deviations for each coordinate axis of an end-effector (TCP) 39 of a robot 24 takes into account the deviations of the tip of the end-effector estimated from the forces it will be subjected to and the deviations resulting from the part specifications.

In particular applications, according to some embodiments, the profile of deviations for each coordinate axis of an end-effector (TCP) 39 of a robot 24 is performed in such a way as to ensure compliance with the geometrical specifications in the processing of a workpiece, generally indicated in the drawing or in the technical specifications.

On the other hand, the profile of deviations for each coordinate axis of an end-effector (TCP) 39 of a robot 24 may be made using as starting information that obtained by any one or more of the following modes:
1. The precision model 11, which can be obtained, for example, by means of the equation shown previously;
2. A process force model 4 and inputting the nominal forces 6 obtained therefrom (described according to Block B1) into the robot model algorithm (FIG. 3); and
3. The evolution of the forces and torques measured during the process or previously in a similar process (torque and force profile 5) and entering the nominal forces 6 obtained from it (described according to Block B1) into the algorithm of the robot model (FIG. 3).

The possible combinations for generating the profile of deviations for each coordinate axis of an end-effector (TCP) 39 of a robot 24 are not mutually exclusive, so that combinations that would be within the scope of the present disclosure are also possible.

In some embodiments, the precision model 11, considers, at a minimum, the deviation of the robot end-effector, the deviation of the tool 18, the dynamic response of the robot positioning and the deviations due to deformation of the robotic system elements.

According to some embodiments, in particular applications of the robot 24 and at least one processing operation, the precision model comprises the robot working repeatability 12, the mounting deviation of the spindle 19 and the deviation of the tool 18.

On the other hand, the precision model 11 can be partially or fully realised with:
1. measurements taken from the system under study;
2. measurements of analogue systems; and
3. estimates.

The possible combinations for generating the precision model 11 are not mutually exclusive, so that combinations are also possible, which would be within the scope of the present disclosure.

FIG. 4A and FIG. 4B depict a diagram for each of several or all of the joints of a robot 24 example. The diagrams shown correspond to an example of a robot with 6 degrees of freedom in a machining process. Each joint has its own diagram. The number of joints of the robot 24 is not limited in the method of the present disclosure. The described method can be used for any number of joints of the chosen robot. On the x-axis is represented the time (t) or any other magnitude reflecting the evolution of the robot 24 throughout the processing operation of a workpiece (e.g. displacement). On the ordinate axis, the estimated torques are represented. FIG. 4A and FIG. 4B depict the nominal torque profile of the joints and their permissible torque range 35. The upper and lower limits of the permissible torque range 35 are the upper limit of the permissible torque 33 and the lower limit of the permissible torque 34 respectively.

In particular, FIG. 4A and FIG. 4B show, on the one hand, a prediction representing the nominal torques 32 of the robot 24 during the entire movement for a given machining operation. And on the other hand, it represents the torques in joints 26 of the robot 24 at each of the machining instants (idle and working) when an uneventful operation is carried out during the entire action.

Once the nominal torque has been estimated, the precision model 11 is applied and the limits of torque deviations are defined, which in this particular example comprises an upper limit (upper limit of the permissible torque 33) and a lower limit (lower limit of the permissible torque 34).

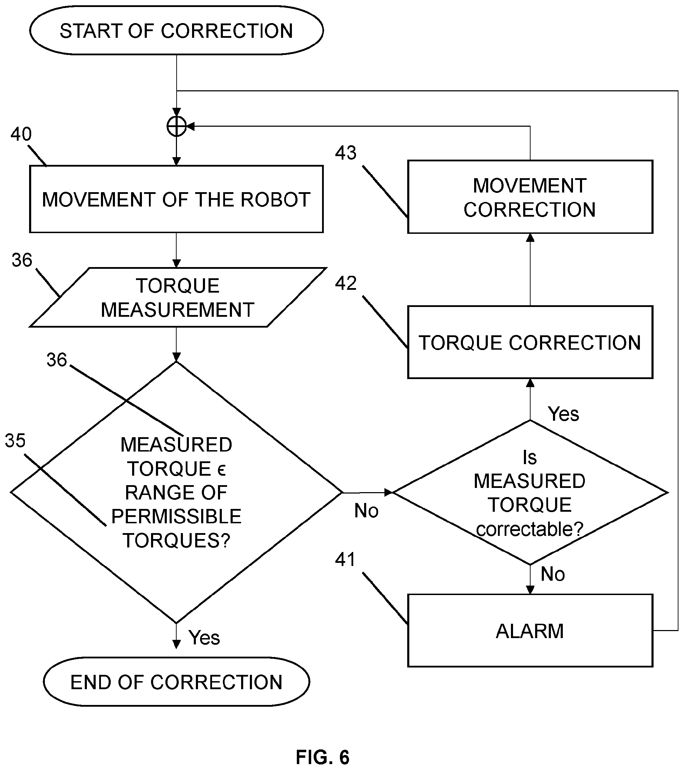

The predictive torque profiles 31 may be used by a controller of the robot 24. The controller of the robot 24 may compare, for each robot joint, the measured torque 36 with the predictive torque profiles 31 (upper limit of the permissible torque 33 and lower limit of the permissible torque 34) and apply an algorithm for controlling and correcting the position or trajectory of the robot 24 (shown in FIG. 6) according to its proximity to the limits of the permissible torque range 35. This movement correction 43 can be done by acting directly on the TCP coordinates or by any other procedure that can be implemented in the control of the robot 24.

By having the predictive torque profiles 31 in joints (FIG. 4A and FIG. 4B) that define the permissible torque range 35 performed by the robot 24 for a given machining operation under suitable operating conditions, the drive of the robot 24 can be controlled by measuring the requested torques in joints 26 every certain increment of movement of the robot. If each torque is within the limits defined by its corresponding predictive torque profile, the next increment of movement is proceeded with, and if not (points a and b of FIG. 4A), one or more torque corrections 42 or alarms 41 may be applied, for example, in the controller.

For the example operation, in this case the milling of a surface of an automotive part, the specifications of the manufacturing drawing, both its dimensions and its tolerances, are obtained. There is also a layout of the location of the robot and the workpiece. The following steps can be carried out:
1. Planning process (prediction). The following tasks are performed in the planning process:
   a) Determine the nominal movement of the robot 27 with the nominal dimensions through inverse kinematics.
      The tolerances of the dimensions are geometrically converted into deviations and the upper limit of the permissible deviation 37 and the lower limit of the permissible deviation 38 are provided. This constructs the profile of deviations for each coordinate axis of an end-effector (TCP) 39 of a robot 24 (FIG. 5).
   b) Calculate the nominal torque 32 of the robot 24, the upper limit of the permissible torque 33 and the lower limit of the permissible torque 34 at each of several or all of the joints with the nominal movement of the robot 27 and their upper and lower permissible limits, from the inverse dynamics. In this way, the predictive torque profile is constructed as shown in FIG. 4A and FIG. 4B.
   c) Define one or more process parameters (e.g., when the process employs a machining cutting tool, the one or more parameters may be: cutting width, feed rate and/or rotation speed), according to the process to be performed.
   (d) Calculate the nominal forces and torques at the TCP by entering the process parameters provided in the process force model 4.
   e) Calculate, with the data of the nominal torques and dynamic characteristics of the robot, the joint deformations preferably considering their stiffness and damping of the robot. And provide the simulated movement of the robot 30 for the required milling operation by means of inverse dynamics.
   (f) Calculate the corrected trajectory prediction of the simulated movement, e.g. with the influence of:
      i. the deformation of the workpiece 20 and deformation of the fixture 21;
      ii. the deviation of the tool 18, with the external and process forces in the TCP 28; and
      iii. the mounting deviation of the spindle 19.
   (g) Calculate, by means of the difference between the corrected and simulated trajectory, a trajectory deviation. This deviation results in a change in the cutting conditions and therefore the cutting forces are recalculated. These calculations are looped until the variations of the deviations at each point of the trajectory do not produce significant variations of the cutting forces.
   h) Check that the new deviations are within the permissible torque range 35, as shown in FIG. 5, which would confirm the feasibility of the machining process with the robot.
      Otherwise, it is necessary to adjust the initial machining parameters and repeat the indicated process.
   i) Determine, for the process under consideration, two diagrams (FIG. 4A, FIG. 4B and FIG. 5) of related predictive torque profiles and position or trajectory deviation profiles at the TCP.
2. Control process. With regard to the control of the robot during the process phase, e.g. machining, the following steps can be followed:
   a) Monitoring the measured torques directly from the motor of each joint as the movement is performed, obtaining the measured torque 36 as depicted in FIG. 4A and FIG. 4B. The deviation of the movement performed, as a calculation of the measured torques, is shown in FIG. 5.
   b) Resetting the process conditions according to the differences between simulated and measured torques when the torque of any of the joints exceeds one of the limits of the permissible torque range 35 (points a and b of FIG. 4A).

Methods of the present disclosure, according to embodiments of the invention, may include one, several or all of the steps described above in relation to the planning process and/or the control process.

In this text, the words "comprises", "includes" and their variants (such as "comprising", "including", etc.) are not to be interpreted in an exclusive manner, i.e. they do not exclude the possibility that what is described includes other elements, steps, etc.

Moreover, the invention is not limited to the specific embodiments described above, but also covers, for example, variants which can be realised by the average person skilled in the art (e.g. in terms of choice of materials, dimensions, components, configuration, etc.), within the scope of the claims.

## Claims

1. A method **characterised in that** it comprises:
processing a simulated movement (30) of a robot (24) in at least one processing operation to determine deviations (10) of the robot due to a dynamic response (24) of the robot and external stresses on the robot;
estimating an overall working precision (16) on a robot end-effector, at each of one or more path coordinates of the end-effector, taking into account effects of the robot dynamic response and process response of at least one processing operation;
performing a predictive calculation of torques (26) in robot joints under robot idle and working conditions, according to a predetermined process force model (4) and/or with information from a process force and torque profile (5), resulting in predictive torque profiles (31);
performing a calculation of a ratio between robot deviations (10) and at least one deviation of a measured torque (36) from a nominal torque (32) at each joint of the robot;
monitoring the measured torques (36) at the joints (26) of the robot, preferably in real time, based on the predictive torque profiles (31); and
generating an alarm action (41) and/or a corrective action based on the monitoring of the measured torques.

2. The method according to claim 1, wherein the predictive torque profiles (31) each comprise an upper limit of a permissible torque (33) and a lower limit of the permissible torque (34) that can be exerted by the robot (24) at positions relative to robot paths in the process.

3. A method according to any one of the preceding claims, wherein the profile of deviations for each coordinate axis of an end-effector (TCP) (39) of a robot (24) comprises maximum and minimum path deflections that can be exerted by the robot on robot paths in the process.

4. A method according to any one of the preceding claims, further comprising: determining a profile of deviations for each coordinate axis of an end-effector (TCP) (39) of a robot (24); and making adjustments to a control of the robot based on the deflection profile to increase an overall working precision of the robot.

5. The method according to claim 4, wherein estimating the overall working precision (16) comprises generating a working precision model (11) including the possibility of correcting deviations in working precision (17) of the robot (24).

6. A method according to any one of the preceding claims, wherein estimating the overall working precision (16) is carried out by means of the following equation:
overall working precision = robot working precision (17) + deviation of a tool (18) of the robot (24) + mounting deviation of a spindle (19) of the robot + deformation of a workpiece (20) processed by the robot + deformation of a fixture (21) of the robot.

7. A method according to any one of the preceding claims, wherein estimating the overall working precision (16) is carried out by considering an error propagation of one or more elements of the robot (24) or of the at least one processing operation.

8. The method according to claim 7, wherein the one or more elements of the robot (24) and the at least one processing operation comprise at least one of: repeatability (12), adjustment of cutting conditions (14), deviation of a tool (18) of the robot, and mounting deviation of a spindle (19) of the robot.

9. A method according to any one of the preceding claims, wherein the dynamic response of the robot (24) and the external robot solicitations comprise process parameters (1), response of a tool (2) of the robot, and characteristics of a workpiece (3) to be processed by the robot.

10. A method according to any one of the preceding claims, wherein the dynamic response of the robot (24) and process effects of the at least one processing operation comprise nominal forces (6) and corrected forces (23) of the robot.

11. A data processing device or system comprising means for carrying out the method of any one of the preceding claims.

12. An assembly comprising the data processing device or system of claim 11 and a robot communicatively coupled to the data processing device or system.

13. Assembly according to claim 12, wherein the robot includes the data processing device or system.

14. A computer program comprising instructions which, when the program is executed on the at least one processing device, causes the at least one processing device to carry out the method of any one of claims 1 to 10.

15. Signal transmitting data processed by the software of claim 14.
